# EUROPEAN PATENT SPECIFICATION

(11) **EP 4 046 912 B1**
(45) Date of publication and mention of the grant of the patent: **29.03.2023**
(21) Application number: 22150808.8
(22) Date of filing: 10.01.2022
(51) Int. Cl.: B64D 5/00, B64G 1/00, B64G 1/62, B64G 1/22

(54) **RECOVERY SYSTEM FOR A ROCKET FAIRING AND CORRESPONDING RECOVERY METHOD**
BERGUNGSSYSTEM FÜR EINE RAKETENVERKLEIDUNG UND ENTSPRECHENDES BERGUNGSVERFAHREN
SYSTÈME DE RÉCUPÉRATION D'UN CARÉNAGE D'UNE FUSÉE ET PROCÉDÉ DE RÉCUPÉRATION CORRESPONDANT

(30) Priority: 19.02.2021 CN 202110188315
(43) Date of publication of application: 24.08.2022
(73) Proprietor: Beijing Interstellar Glory Space Technology Co., Ltd., Beijing 100032 (CN); Beijing Interstellar Glory Technology LLC, Beijing 100176 (CN)
(72) Inventor: PENG, Xiaobo, Beijing, 100032 (CN); ZHENG, Liwei, Beijing, 100032 (CN); SHI, Fashu, Beijing, 100032 (CN)
(74) Representative: Hertin und Partner Rechts- und Patentanwälte PartG mbB

(56) References cited:
- CN-A- 109 855 480
- CN-A- 109 931 823
- CN-A- 110 498 064
- CN-A- 111 174 646
- CN-A- 111 721 166
- DE-C1- 10 147 144

## Description

### Technical Field

The present invention relates to the field of rocket fairing recovery technology, and in particular, to a recovery system and method for a rocket fairing.

### Background

A rocket fairing is made of high-strength, lightweight, high-temperature-resistant materials with high radio wave permeability, and is located on the top of a carrier rocket, providing a strong armor for a payload spacecraft while maintaining the aerodynamic configuration of the rocket.

Before the rocket lifts off, the fairing protects the spacecraft on the ground and ensures the requirements on temperature, humidity, and cleanliness for the spacecraft. When the rocket lifts off through the atmospheric layer, the fairing can protect the spacecraft from damage caused by aerodynamic and aerothermal effects. After the carrier rocket flies out of the atmospheric layer, the fairing longitudinally splits a rocket body into two halves and is thrown away to complete its mission and returns to the ground. A fairing return process means a process of directly entering the atmospheric layer of the Earth along its flight orbit or leaving its original launch orbit and entering the atmospheric layer along a transformed orbit, slowing down through the atmosphere in the atmospheric layer, and landing safely on the Earth. For medium and large volume rockets, fairings are large in size and high in process requirement and price, and are worthy of recovery and reuse.

In the prior art, a fairing is generally controlled to fall into seawater, which buffers an impact force generated during landing of the fairing, and then a marine receiving ship is used for salvage. However, the marine receiving ship has low maneuverability, and the fairing can be reused only if the immersion time of the fairing in seawater is very short, so its recovery is difficult.

Document DE10147144 discloses a recovery method wherein an ejected space rocket stage is converted into a glider flight upon reaching the heavier layers of the atmosphere, with an aircraft tracking the glider flight at the same altitude and used for attachment of a towing line, allowing the rocket stage to be towed to a landing location.

### Summary

Therefore, a technical problem to be solved by the present invention is to overcome the shortcoming of high difficulty in recovery of a rocket fairing in the prior art that is recovered after falling into seawater, and thus a recovery system and method for a rocket fairing is provided herein.

To solve the above technical solution, the present invention provides a recovery system for a rocket fairing, including the rocket fairing,
a guide structure, a tow device and a soft-landing structure,
wherein the guide structure includes a rudder and canard wings arranged on the rocket fairing;
the tow device includes an aircraft and an abutting joint structure, the aircraft being configured to be connected to the fairing through the abutting j oint structure; and
the soft-landing structure includes an airbag, the airbag being arranged on the fairing, and after being inflated, the airbag being located under the fairing in a flight attitude.

As a preferred solution, the rudder is provided with a drive device, which is a controllable drive device, the drive device being controlled by a control platform.

As a preferred solution, the airbag is inflated under the control of a control platform.

As a preferred solution, the abutting joint structure includes a tow cable provided on the aircraft and an abutting joint cable provided on the fairing, the tow cable and the abutting joint cable each having a plug taper sleeve for abutting joint, respectively.

As a preferred solution, the tow cable and the abutting joint cable are rigid rods.

The present invention provides a recovery method for a rocket fairing, including the following steps:
controlling, by a guide structure, a flight track of a fairing in a landing recovery process;
towing, by a tow device, the fairing to fly in the air; and
enabling, by a soft-landing structure, the fairing to glide on the ground for landing, wherein the soft-landing structure buffers an impact force on the fairing.

As a preferred solution, when the fairing is above 80km in the air, an airbag is controlled by a control platform to be inflated and opened.

As a preferred solution, the fairing controls a rudder on the fairing through a control platform, so that the fairing glides aloft.

As a preferred solution, the tow device includes an aircraft, and after being connected to the fairing through an abutting joint structure, the aircraft tows the fairing to fly toward a preset area.

As a preferred solution, the aircraft performs abutting joint and towing operations on the fairing below 30km in the air.

The technical solutions of the present invention have the following advantages:
1. In the recovery system for a rocket fairing provided in the present invention, the guide structure is used to control the flight track of the fairing at a high altitude, the aircraft is used to tow the fairing at a low altitude so that the fairing glides toward a designated landing area, and the soft-landing structure is used to enable the fairing to glide on land and buffer an impact force of the fairing so that the fairing can be recovered smoothly, which can reduce the difficulty of fairing recovery compared with an offshore recovery system.
2. In the recovery method for a rocket fairing provided in the present invention, by using the aircraft for towing and the soft-landing structure in combination, the fairing can be recovered at a specified location on land, thereby reducing the difficulty of recovering the fairing.
3. In the recovery method for a rocket fairing provided in the present invention, when the aircraft and the fairing meet in the air, the abutting joint structure can be used to connect them accurately, quickly and reliably, and stabilize the flight attitude of the fairing, and then enable gradual transition of the fairing to a transportation mode of flying with the aircraft.

### Brief Description of the Drawings

In order to describe the technical solutions in the specific implementations of the present invention or in the prior art more clearly, a simple introduction on the accompanying drawings used in the description of the specific implementations or the prior art is given below. Obviously, the accompanying drawings in the description below are merely some of the implementations of the present invention, based on which other drawings may be obtained by those of ordinary skill in the art without creative work.
Fig. 1 is a schematic diagram of an implementation of a recovery method for a rocket fairing provided in an embodiment of the present invention.
Fig. 2 is a schematic diagram of a tow device in a recovery apparatus for a rocket fairing provided in an embodiment of the present invention;
Fig. 3 is a schematic diagram of a towing state of the tow device of Fig. 2; and
Fig. 4 is a front view of a rocket fairing.

Reference numerals:
1, fairing; 2, rudder; 3, canard wing; 4, airbag; 5, aircraft; 6, tow cable; 7, abutting joint cable; 8, plug taper sleeve.

### Detailed Description of the Embodiments

Technical solutions of the present invention will be described below clearly and completely in conjunction with the accompanying drawings.

In description of the present invention, it is to be noted that orientation or location relations denoted by the terms "center", "upper", "lower", "left", "right", "vertical", "horizontal", "inner", "outer", etc. are orientation or location relations based on illustration in the drawings, are only intended to facilitate describing the present invention and simplify description, instead of indicating or implying the denoted devices or elements must have specific orientations and are constructed and operated in specific orientations, and thus they should not be construed as limiting the present invention. In addition, the terms "first", "second", "third", etc. are only used for description and should not be construed as indicating or implying relative importance.

In description of the present invention, it is to be noted that, unless otherwise clearly specified and defined, the terms "install", "be connected with", "be connected", etc., should be understood in a broad sense. For example, the term "be connected" may indicate "be fixedly connected", "be detachably connected", "be integratedly connected", "be mechanically connected", "be electrically connected", "be directly connected", "be indirectly connected through an intermediate medium", or "internal communication between two elements or interactive relationship between two elements". For a person of ordinary skill in the art, specific meanings of the above-mentioned terms in the present invention may be construed according to specific conditions.

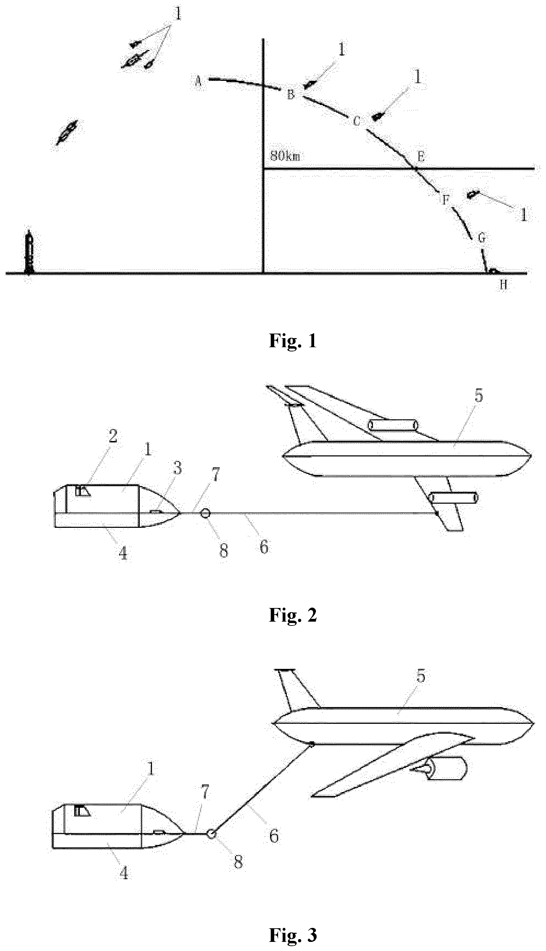

This embodiment provides a recovery method for a rocket fairing. As shown in Fig. 1, a rocket lifts off from land and starts second-stage flight, and then a fairing 1 separates from the rocket at a point A, and the fairing 1 enters a return trajectory. During a return process, the fairing 1 at a point B controls its flight attitude and maintains stability by a rudder 2 and canard wings 3.

Afterwards, the fairing 1 at a point C controls, by a control platform, an airbag 4 to be inflated and opened.

Then, the fairing 1 re-enters the atmospheric layer at a point E, which is located about 80km in the air.

The fairing 1 in the atmospheric layer controls the rudder 2 by the control platform, and is controlled by the structure of the canard wings 3 and airbag 4 to glide at a high altitude. Specifically, the control platform controls the gliding of the fairing 1 through a GNC system and a communication system. The GNC system, which is a guidance, navigation and control subsystem of a spaceship, or a GNC subsystem for short, is responsible for all motion control tasks of the spaceship from takeoff to return.

Then, as shown in Fig. 2, when the fairing 1 is about 20km in the air, an aircraft 5 is connected to the fairing 1 in an abutting joint manner in the air. After connection, as shown in Fig. 3, the aircraft 5 drags the fairing 1 to flight toward a preset recovery area. Aerial rendezvous and docking is an autonomous and controllable process, which is implemented accurately and reliably in relatively short time, so information, communication and control of the fairing 1 must be accurate and fast, and the following technical measures need to be adopted: first of all, the aircraft 5 is an aerial platform system that integrates communication, command and transportation, and the fairing 1 is linked to the platform by information systems and wireless communication; the control capability of the fairing 1 is relatively limited, and the fairing 1 needs to control and maintain its flight attitude and heading direction, so for the aircraft 5, the fairing 1 is an object with a known and determined destination, and the aircraft 5 precisely plans its route and commands and controls the rendezvous and docking process; and to improve the flexibility of the rendezvous and docking process, technological iterations and continuous improvements may be performed to achieve unmanned and autonomously control of the rendezvous and docking process, wherein the aircraft 5 may be an airplane or an unmanned aerial vehicle.

Finally, the aircraft 5 pushes and drags the fairing 1 to glide and land in the recovery area, and the fairing 1 touches the ground through the airbag 4, thereby offsetting most impact force to ensure complete recovery of the fairing 1.

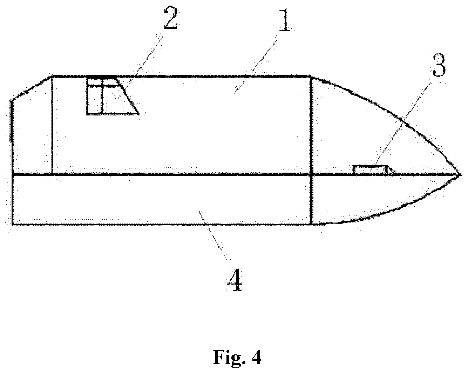

A recovery system for a rocket fairing in this embodiment includes a guide structure, a tow device and a soft-landing structure. The guide structure, as shown in Fig. 4, includes a rudder 2 and canard wings 3 arranged on a fairing 1. The rudder 2 is provided with a drive device, which is a controllable drive device. The drive device is controlled by a control platform during gliding of the fairing 1. The canard wings 3 are configured to provide a lift force during gliding of the fairing 1. In addition, the fairing 1 also has an airbag 4. The airbag 4 is inflated under the control of the control platform, and after inflation, the airbag 4 is located under the fairing 1 in a flight attitude. The airbag 4 is used to buffer a landing impact of the fairing 1 on the one hand, and to enhance the flight attitude controllability of the fairing 1 on the other hand. Therefore, when the fairing 1 with the airbag 4 is above 80km, the airbag 4 is inflated and opened under the control of the control platform to control a gliding attitude of the fairing 1 through the rudder 2 and the canard wings 3.

The tow device, as shown in Fig. 2, includes an aircraft 5 and an abutting joint structure. The aircraft 5 is connected to the fairing 1 through the abutting joint structure. The abutting joint structure is similar to an aerial refueling abutting joint structure in the prior art, and the abutting joint structure includes a tow cable 6 provided on the aircraft 5 and an abutting joint cable 7 provided on the fairing 1, the tow cable 6 and the abutting joint cable 7 each having a plug taper sleeve 8 for abutting joint, respectively. Preferably, the tow cable 6 and the abutting joint cable 7 are rigid rods. The tow cable 6 may be mounted to the tail of a fuselage or in a pod under a wing, and is manipulated by a pilot or a docking person. To reduce the mass burden of the fairing 1 while not reducing the carrying capacity of the rocket, the design of the tow cable 7 of the fairing 1 is sought to be simplified, so the tow cable 7 may be designed to be of a foldable or inflatable-and-deployable rod type, and its rigidity should meet the requirement.

As shown in Fig. 3, after the aircraft 5 docks with the fairing 1, the aircraft 5 tows the fairing 1 to fly toward a preset recovery area. If landing is performed with this attitude, the fairing 1 may touch down earlier, so the cushion airbag 4 is used to buffer the landing impact, and then the fairing glides while being dragged. To mitigate damage to the airbag 4, the abutting j oint structure may be unlocked and separated during the dragging process.

The airbag 4 of the fairing 1 adopts a multi-layer structure design, and the multi-layer airbag 4 includes, from outside to inside, successively: a heat-proof layer, a heat-insulating layer and a force-bearing layer, wherein the heat-proof layer is replaceable, and the internal flexible heat-insulating layer may be reused many times.

In the recovery system for a rocket fairing provided in this embodiment, the fairing 1 is designed with a lift-body-like configuration, and then combined with the controllable airbag 4, which achieve an autonomous and controllable recovery process, and the fairing is towed and transported by the aircraft 5, which overcomes insufficient voyage and maneuverability of the fairing 1, increases the range of the landing area of the lift-body fairing 1, reduces the landing precision requirement of the fairing 1, and increases the flexibility and maneuverability of ground transportation; furthermore, the added recovery system has little influence on the carrying capacity of the rocket; the dragging mode increases the stability of recovery landing and reduces the landing impact; moreover, the recovery system is reusable, which reduces the cost of use.

Obviously, the embodiments described above are merely examples for clear description, and are not intended to limit the implementations. Other variations or modifications of the various forms may also be made by those skilled in the art based on the above description. There is no need and no way to describe all implementations in an exhaustive manner here.

The scope of protection is defined by the appended claims.

## Claims

1. A recovery system for a rocket fairing (1), comprising the rocket fairing (1), a guide structure, a tow device and a soft-landing structure, wherein
the guide structure comprises a rudder (2) and canard wings (3) arranged on the rocket fairing (1);
the tow device comprises an aircraft (5) and an abutting joint structure, the aircraft (5) being configured to be connected to the rocket fairing (1) through the abutting joint structure; and
the soft-landing structure comprises an airbag (4), the airbag (4) being arranged on the rocket fairing (1), and after being inflated, the airbag (4) being located under the rocket fairing (1) in a flight attitude.

2. The recovery system for a rocket fairing according to claim 1, wherein the rudder (2) is provided with a drive device, which is a controllable drive device, the drive device being controlled by a control platform.

3. The recovery system for a rocket fairing according to claim 1, wherein the airbag (4) is configured to be inflated under the control of a control platform.

4. The recovery system for a rocket fairing according to any one of claims 1-3, wherein the abutting joint structure comprises a tow cable (6) provided on the aircraft (5) and an abutting joint cable (7) provided on the rocket fairing (1), the tow cable (6) and the abutting joint cable (7) each having a plug taper sleeve (8) for abutting joint, respectively.

5. The recovery system for a rocket fairing according to claim 4, wherein the tow cable (6) and the abutting joint cable (7) are rigid rods.

6. A recovery method for a rocket fairing, comprising the following steps:
controlling, by a guide structure, a flight track of the rocket fairing (1) in a landing recovery process;
towing, by a tow device, the rocket fairing (1) to fly in the air; and
enabling, by a soft-landing structure, the rocket fairing (1) to glide on the ground for landing, wherein the soft-landing structure buffers an impact force on the rocket fairing (1).

7. The recovery method for a rocket fairing according to claim 6, wherein the soft-landing structure comprises an airbag (4) arranged on the rocket fairing (1), and wherein when the rocket fairing (1) is above 80km in the air, the airbag (4) is controlled by a control platform to be inflated and opened.

8. The recovery method for a rocket fairing according to claim 6, wherein the rocket fairing (1) controls a rudder (2) on the rocket fairing (1) through a control platform, so that the rocket fairing (1) glides aloft.

9. The recovery method for a rocket fairing according to any one of claims 6-8, wherein the tow device comprises an aircraft (5), and after being connected to the rocket fairing (1) through an abutting joint structure, the aircraft (5) tows the rocket fairing (1) to fly toward a preset area.

10. The recovery method for a rocket fairing according to claim 9, wherein the aircraft (5) performs abutting joint and towing operations on the rocket fairing (1) below 30km in the air

## Patentansprüche

1. Bergungssystem für eine Raketenverkleidung (1), umfassend die Raketenverkleidung (1), eine Führungsstruktur, eine Schleppvorrichtung und eine Weichlandestruktur, wobei
die Führungsstruktur ein Seitenruder (2) und Entenflügel (3) umfasst, die an der Raketenverkleidung (1) angeordnet sind;
die Schleppvorrichtung ein Luftfahrzeug (5) und eine Stoßverbindungsstruktur umfasst, wobei das Luftfahrzeug (5) dazu ausgelegt ist, durch die Stoßverbindungsstruktur mit der Raketenverkleidung (1) verbunden zu werden; und
die Weichlandestruktur einen Airbag (4) umfasst, wobei der Airbag (4) an der Raketenverkleidung (1) angeordnet ist und der Airbag (4) sich nach seinem Aufblasen unter der Raketenverkleidung (1) in einer Fluglage befindet.

2. Bergungssystem für eine Raketenverkleidung nach Anspruch 1, wobei das Seitenruder (2) mit einer Antriebsvorrichtung bereitgestellt ist, die eine steuerbare Antriebsvorrichtung ist, wobei die Antriebsvorrichtung von einer Steuerplattform gesteuert wird.

3. Bergungssystem für eine Raketenverkleidung nach Anspruch 1, wobei der Airbag (4) dazu ausgelegt ist, gemäß der Steuerung einer Steuerplattform aufgeblasen zu werden.

4. Bergungssystem für eine Raketenverkleidung nach einem der Ansprüche 1-3, wobei die Stoßverbindungsstruktur ein Schleppkabel (6), das am Luftfahrzeug (5) vorgesehen ist, und ein Stoßverbindungskabel (7), das an der Raketenverkleidung (1) vorgesehen ist, umfasst, wobei das Schleppkabel (6) und das Stoßverbindungskabel (7) jeweils eine Steckkegelhülse (8) zur Stoßverbindung aufweisen.

5. Bergungssystem für eine Raketenverkleidung nach Anspruch 4, wobei das Schleppkabel (6) und das Stoßverbindungskabel (7) starre Stangen sind.

6. Bergungsverfahren für eine Raketenverkleidung, umfassend die folgenden Schritte:
Steuern eines Flugwegs der Raketenverkleidung (1) in einem Lande-/Bergungsvorgang durch eine Führungsstruktur;
Schleppen der Raketenverkleidung (1) durch eine Schleppvorrichtung zum Fliegen in der Luft; und
Ermöglichen durch eine Weichlandestruktur, dass die Raketenverkleidung (1) zur Landung auf dem Boden gleitet,
wobei die Weichlandestruktur eine Aufprallkraft auf die Raketenverkleidung (1) puffert.

7. Bergungsverfahren für eine Raketenverkleidung nach Anspruch 6, wobei die Weichlandestruktur einen Airbag (4) umfasst, der an der Raketenverkleidung (1) angeordnet ist, und wobei der Airbag (4) von einer Steuerplattform gesteuert wird, um aufgeblasen und geöffnet zu werden, wenn die Raketenverkleidung (1) sich über 80 km in der Luft befindet.

8. Bergungsverfahren für eine Raketenverkleidung nach Anspruch 6, wobei die Raketenverkleidung (1) ein Seitenruder (2) an der Raketenverkleidung (1) durch eine Steuerplattform steuert, sodass die Raketenverkleidung (1) in der Höhe gleitet.

9. Bergungsverfahren für eine Raketenverkleidung nach einem der Ansprüche 6 bis 8, wobei die Schleppvorrichtung ein Luftfahrzeug (5) umfasst, und das Luftfahrzeug (5) die Raketenverkleidung (1) zum Fliegen zu einem vorbestimmten Bereich schleppt, nachdem es durch eine Stoßverbindungsstruktur mit der Raketenverkleidung (1) verbunden wurde.

10. Bergungsverfahren für eine Raketenverkleidung nach Anspruch 9, wobei das Luftfahrzeug (5) Stoßverbindungs- und Schleppvorgänge an der Raketenverkleidung (1) unter 30 km in der Luft durchführt.

## Revendications

1. Système de récupération pour un carénage de fusée (1), comprenant le carénage de fusée (1), une structure de guidage, un dispositif de remorquage et une structure d'atterrissage en douceur, dans lequel
la structure de guidage comprend un gouvernail (2) et des ailes de canard (3) agencées sur le carénage de fusée (1) ;
le dispositif de remorquage comprend un aéronef (5) et une structure d'articulation en butée, l'aéronef (5) étant configuré pour être relié au carénage de fusée (1) par l'intermédiaire de la structure d'articulation en butée ; et
la structure d'atterrissage en douceur comprend un airbag (4), l'airbag (4) étant agencé sur le carénage de fusée (1), et après avoir été gonflé, l'airbag (4) étant situé sous le carénage de fusée (1) dans une attitude de vol.

2. Système de récupération d'un carénage de fusée selon la revendication 1, dans lequel le gouvernail (2) est muni d'un dispositif d'entraînement, qui est un dispositif d'entraînement commandable, le dispositif d'entraînement étant commandé par une plate-forme de commande.

3. Système de récupération pour un carénage de fusée selon la revendication 1, dans lequel l'airbag (4) est configuré pour être gonflé sous la commande d'une plate-forme de commande.

4. Système de récupération pour un carénage de fusée selon l'une quelconque des revendications 1 à 3, dans lequel la structure d'articulation en butée comprend un câble de remorquage (6) prévu sur l'aéronef (5) et un câble d'articulation en butée (7) prévu sur le carénage de fusée (1), le câble de remorquage (6) et le câble d'articulation en butée (7) ayant chacun un manchon conique de fiche (8) pour l'articulation en butée, respectivement.

5. Système de récupération pour un carénage de fusée selon la revendication 4, dans lequel le câble de remorquage (6) et le câble d'articulation en butée (7) sont des tiges rigides.

6. Procédé de récupération pour un carénage de fusée, comprenant les étapes suivantes :
la commande, par une structure de guidage, d'une trajectoire de vol du carénage de fusée (1) dans un processus de récupération à l'atterrissage ;
le remorquage, par un dispositif de remorquage, du carénage de fusée (1) pour voler dans les airs ; et
le fait de permettre, par une structure d'atterrissage en douceur, au carénage de fusée (1) de glisser sur le sol pour l'atterrissage, dans lequel la structure d'atterrissage en douceur amortit une force d'impact sur le carénage de fusée (1) .

7. Procédé de récupération pour un carénage de fusée selon la revendication 6, dans lequel la structure d'atterrissage en douceur comprend un airbag (4) agencé sur le carénage de fusée (1), et dans lequel lorsque le carénage de fusée (1) est à plus de 80 km dans les airs, l'airbag (4) est commandé par une plate-forme de commande pour être gonflé et ouvert.

8. Procédé de récupération pour un carénage de fusée selon la revendication 6, dans lequel le carénage de fusée (1) commande le gouvernail (2) sur le carénage de fusée (1) par l'intermédiaire d'une plate-forme de commande, de sorte que le carénage de fusée (1) plane en altitude.

9. Procédé de récupération pour un carénage de fusée selon l'une quelconque des revendications 6 à 8, dans lequel le dispositif de remorquage comprend un aéronef (5), et après avoir été relié au carénage de fusée (1) par l'intermédiaire d'une structure d'articulation en butée, l'aéronef (5) remorque le carénage de fusée (1) pour qu'il vole vers une zone prédéfinie.

10. Procédé de récupération pour un carénage de fusée selon la revendication 9, dans lequel l'aéronef (5) effectue des opérations d'articulation en butée et de remorquage sur le carénage de fusée (1) en dessous de 30 km dans l'air.
